# EUROPEAN PATENT APPLICATION

(11) **EP 2 416 579 A2**
(43) Date of publication of application: **08.02.2012**
(21) Application number: 11176587.1
(22) Date of filing: 04.08.2011
(51) Int. Cl.: H04N 13/00

(54) **System and method for displaying three-dimensional video**

(30) Priority: 04.08.2010 US 850484
(71) Applicant: Disney Enterprises, Inc., Burbank, CA 91521 (US)
(72) Inventor: Strein, Michael J., Burbank, CA California 91521 (US)
(74) Representative: Collins, John David

(57) **Abstract**

A system and method for displaying three-dimensional video are disclosed. In one embodiment, a method comprises receiving three-dimensional video comprising first video comprising a plurality of first frames and second video comprising a plurality of second frames, receiving a synchronization signal, and displaying interleaved first and second frames based on the synchronization signal.

## Description

### BACKGROUND

### Field

This application relates to systems and methods for displaying video, and in particular, to simultaneously displaying three-dimensional video on one or more displays.

### Description of the Related Art

Control room operators must simultaneously view multiple display devices to monitor the various displayed content. Multiple display devices can also be used in other contexts, such as a consumer electronics showroom, a television sales floor, or an entertainment event. Embodiments disclosed herein allow for the display of three-dimensional video on multiple display devices.

### SUMMARY

The systems and methods of the development each have several aspects, no single one of which is solely responsible for its desirable attributes. Without limiting the scope of this disclosure as expressed by presented claims, the more prominent features will now be discussed briefly. After considering this discussion, and particularly after reading the section entitled "Detailed Description" one will understand how the sample features of this development provide advantages that include simultaneous display of three-dimensional video on one or more displays.

One aspect is a system for displaying a plurality of three-dimensional video feeds, the system comprising a plurality of display devices, each display device configured to receive a three-dimensional video feed comprising first video comprising a plurality of first frames and second video comprising a plurality of second frames, and a synchronizer configured to transmit a common synchronization signal to each of the display devices, wherein each display device is configured to receive the synchronization signal and to display interleaved first and second frames in synchrony with the other display devices based on the synchronization signal.

Another aspect is a method for displaying three-dimensional video, the method comprising receiving three-dimensional video comprising first video comprising a plurality of first frames and second video comprising a plurality of second frames, receiving a synchronization signal, and displaying interleaved first and second frames based on the synchronization signal.

Another aspect is a system for displaying three-dimensional video, the system comprising a receiver configured to receive three-dimensional video comprising first video comprising a plurality of first frames and second video comprising a plurality of second frames and to receive a synchronization signal, and a display configured to display interleaved first and second frames based on the synchronization signal.

Yet another aspect is a system for displaying three-dimensional video, the system comprising means for receiving three-dimensional video comprising first video comprising a plurality of first frames and second video comprising a plurality of second frames, means for receiving a synchronization signal, and means for displaying interleaved first and second frames based on the synchronization signal.

Yet another aspect is a computer-readable medium carrying instructions which, when executed by a processor, cause an apparatus to perform a method of displaying three-dimensional video, the method comprising receiving three-dimensional video comprising first video comprising a plurality of first frames and second video comprising a plurality of second frames, receiving a synchronization signal, and displaying interleaved first and second frames based on the synchronization signal..

### BRIEF DESCRIPTION OF THE DRAWINGS

Figure 1 is a functional block diagram of a portion of a control room.

Figure 2 is a functional block diagram of a system for displaying a number of different three-dimensional video feeds on different display devices.

Figure 3 is a functional block diagram of a display device suitable for use as a display device of the system of Figure 2.

Figure 4 is a functional block diagram of controller suitable for use as the controller of Figure 2.

Figure 5 is a functional block diagram of a pair of glasses suitable for use as the glasses of Figure 2.

Figure 6 is a flowchart illustrating a method of displaying three-dimensional video.

Figure 7 is a plot of an exemplary synchronization signal.

### DETAILED DESCRIPTION

The following detailed description is directed to certain specific aspects of the development. However, the development can be embodied in a multitude of different ways, for example, as defined and covered by any presented claims. It should be apparent that the aspects herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. Similarly, methods disclosed herein may be performed by one or more computer processors configured to execute instructions retrieved from a computer-readable storage medium. A computer-readable storage medium stores information, such as data or instructions, for some interval of time, such that the information can be read by a computer during that interval of time. Examples of computer-readable storage media are memory, such as random access memory (RAM), and storage, such as hard drives, optical discs, flash memory, floppy disks, magnetic tape, paper tape, punch cards, and Zip drives.

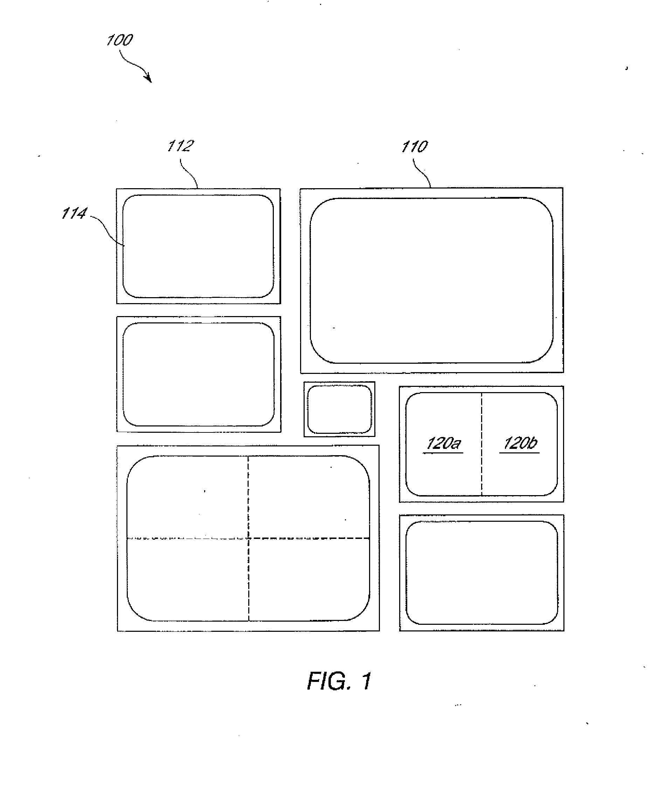

Figure 1 is a functional block diagram of a portion of a control room 100. The control room 100 includes a plurality of display devices 110 for displaying video feeds. Each display device includes a separate housing 112 and a monitor 114 upon which video is displayed. One or more of the display devices 110 can be configured to respectively display multiple video feeds on multiple portions 120a, 120b of the monitor 114.

In television production, a production control room is a control room in which the outgoing program is composed. The production control room, also known as the "gallery" or studio control room, can include a video monitor wall with a number of different display devices 110 each displaying different video. The production control room can also include a control panel used to select the video source to be seen on-air, an audio processing and mixing console, a video processing and mixing console for inserting graphics and digital video effects into the video, and storage for storing graphics and video.

In television broadcasting, a master control is a control room which operates as the centralization of broadcast operations. In some cases, the master control is the final point before a signal is transmitted over-the-air or sent to a cable television operator or satellite provider for broadcast. Television master control rooms can include banks of video monitors or other display devices 110, satellite receives, videotape machines, transmission equipment, and computer broadcast automation equipment for recording and playback of on-air programming.

A master control is generally staffed by operators around-the-clock to ensure continuous operation. Master control operators are responsible for monitoring the quality and accuracy of on-air product, ensuring the transmission meets government regulations, troubleshooting equipment malfunctions, and preparing programming for future playback. Regulations include both technical regulations, such as those against over-modulation and dead air, as well as content regulations, including indecency and station ID. Embodiments disclosed herein allow for the display of three-dimensional video on a number of different display devices 110 of a control room.

As mentioned above, multiple display devices can also be used in other contexts. For example, a consumer electronics showroom may have a number of different televisions being exhibited. As another example, a sales floor at an electronic store may have a number of different televisions being displayed to prospective customers. In another example, an entertainment event may have a number of different televisions displaying various view of the event. Embodiments disclosed herein can be used in any context in which multiple display devices were viewed simultaneously.

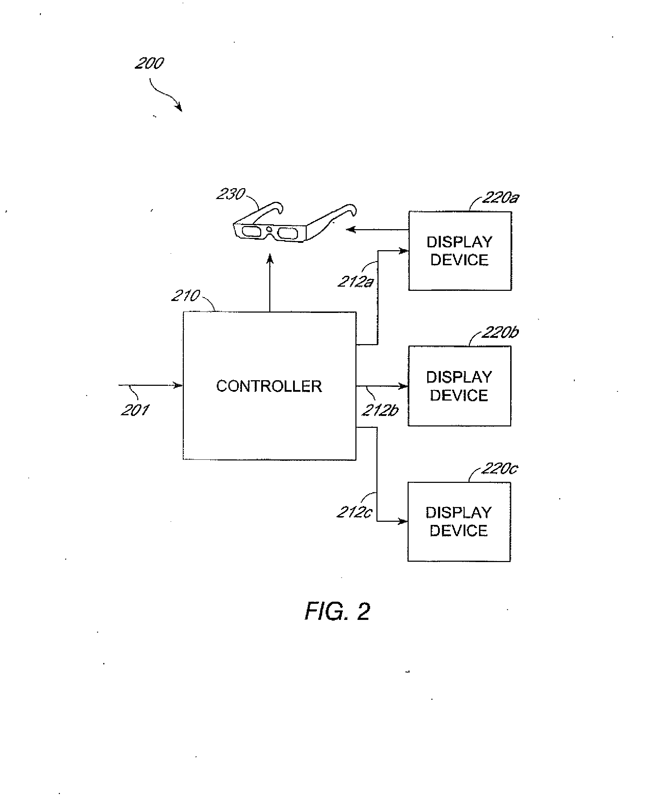

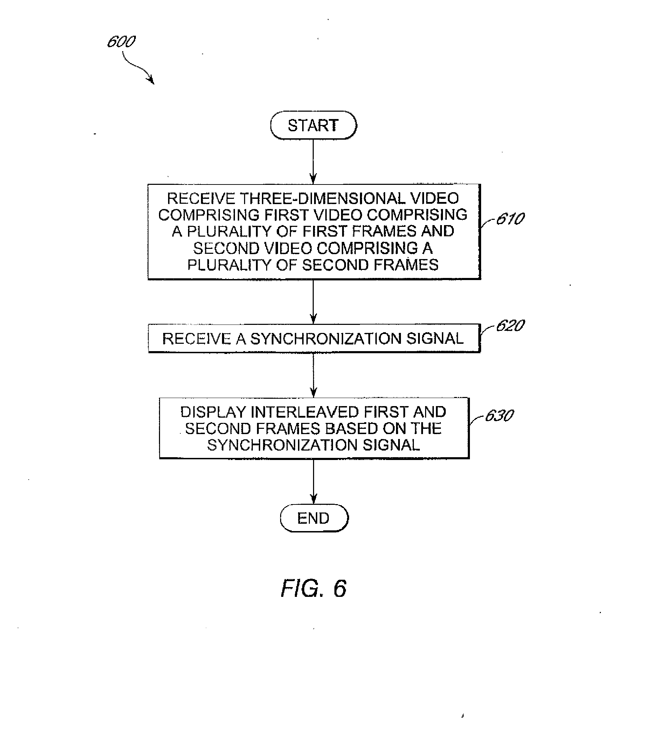

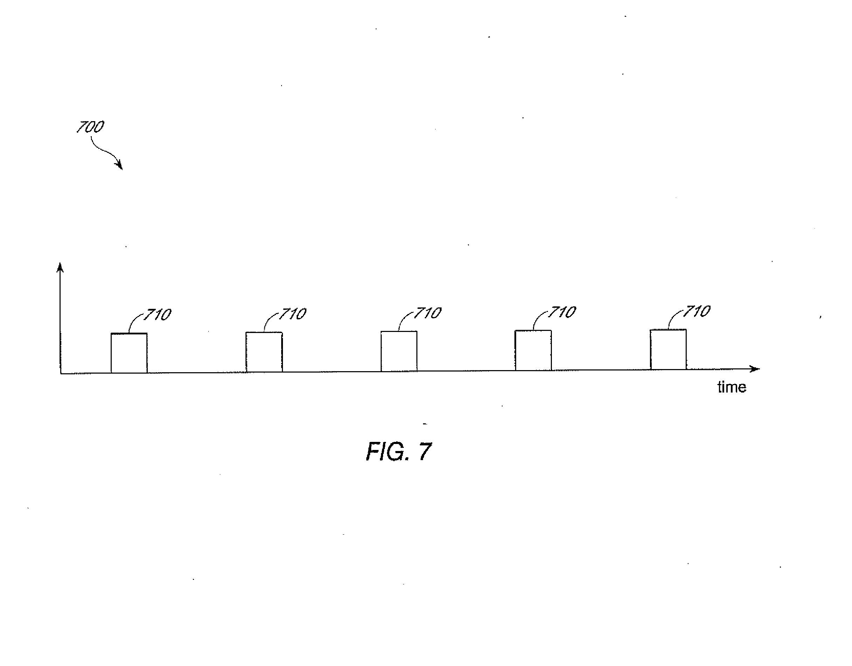

Figure 2 is a functional block diagram of a system 200 for displaying a number of different three-dimensional video feeds on different display devices 220a, 220b, 220c. The system 200 includes a controller 210 which outputs a common synchronization signal to each of a plurality of display devices 220a, 220b, 220c via the communication links 212a, 212b, 212c. Details regarding the synchronization signal and methods of displaying video based on the synchronization signal are described below with respect to Figures 6 and 7. In one embodiment, the controller 210 also transmits a switching signal to a pair of glasses 230 which can be worn by the user viewing the display devices 220a, 220b, 220c. In another embodiment, one or more of the display devices 220a, 220b, 220c generates and transmits a switching signal to the glasses 230 based on the received synchronization signal. In one embodiment, only one display device 220a, 220b, 220c transmits a switching signal to the glasses 230 to avoid potential interference from multiple signals. In one embodiment, the controller 210 transmits an indication to the display devices 220a, 220b, 220c indicating whether or not the display device 220a, 220b, 220c should transmit a switching signal.

In one embodiment, the controller also receives a plurality of three-dimensional video feeds via an input 201 and outputs different three-dimensional video feeds to the display devices 220a, 220b, 220c, via communication links 212a, 212b, 212c. Each three-dimensional video feed includes a series of first frames (to be viewed by one eye of a user) and a series of second frames (to be viewed by the other eye of the user). In another embodiment, the display devices 220a, 220b, 220c receive three-dimensional video from another source. Although the controller 210 is shown in Figure 2 as being separate from the display devices 220a, 220b, 220c, in another embodiment, the controller 210 is itself a display device or integrated within one of the display devices 220a, 220b, 220c. In such an embodiment, the display device including a controller acts as a master display device, generating and transmitting a synchronization signal to the other display devices, referred to as slave display devices. Each of the display devices may store an indication in a memory indicative of whether the display device is configured as a master or a slave.

As mentioned above, in one embodiment, only one display device 220a, 220b, 220c transmits a switching signal to the glasses 230 to avoid potential interference from multiple signals. In one embodiment, the master display device transmits the switching signal.

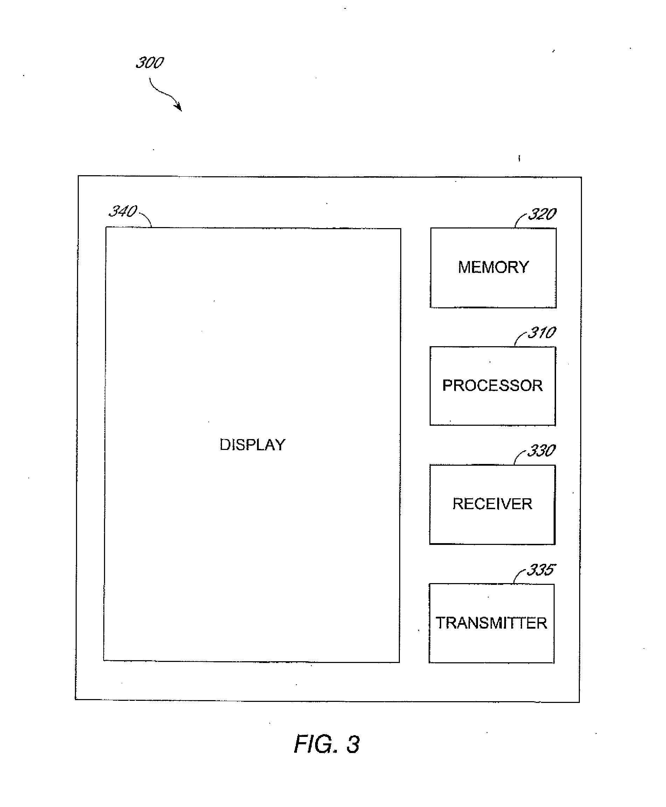

Figure 3 is a functional block diagram of a display device 300 suitable for use as a display device 220a, 220b, 220c of the system 200 of Figure 2. The display device 300 includes a processor 310 in data communication with a memory 320, a receiver 330, a transmitter 335, and a display 340.

The processor 310 can be a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. A processor may also be implemented as a combination of computing devices, e.g., a combination of a DSP and a microprocessor, a plurality of microprocessors, one or more microprocessors in conjunction with a DSP core, or any other such configuration.

The processor 310 can be coupled, via one or more buses, to read information from or write information to the memory 320. The processor may additionally, or in the alternative, contain memory, such as processor registers. The memory 320 can include processor cache, including a multi-level hierarchical cache in which different levels have different capacities and access speeds. The memory 320 can also include random access memory (RAM), other volatile storage devices, or non-volatile storage devices. The storage can include hard drives, optical discs, such as compact discs (CDs) or digital video discs (DVDs), flash memory, floppy discs, magnetic tape, and Zip drives.

The processor 310 is also coupled to a receiver 330, a transmitter 335, and a display 340. The receiver 330 receives three-dimensional video and provides the video to the processor 310. The receiver 330 can receive three-dimensional video, for example, from the controller 210 of Figure 2. The receiver 330 also receives a synchronization signal and provides the synchronization signal to the processor 310. The display 340 receives image data from the processor 310 based on the received video and the synchronization signal and displays the image data to a viewer.

In one embodiment, the processor 310 generates and the transmitter 335 transmits a switching signal to a pair of glasses to be worn by a user viewing the display devices. In another embodiment, the receiver 330 receives an indication of whether or not the display device 330 should transmit the switching signal and the transmitter 335 transmits (or does not transmit) the switching signal based on this indication.

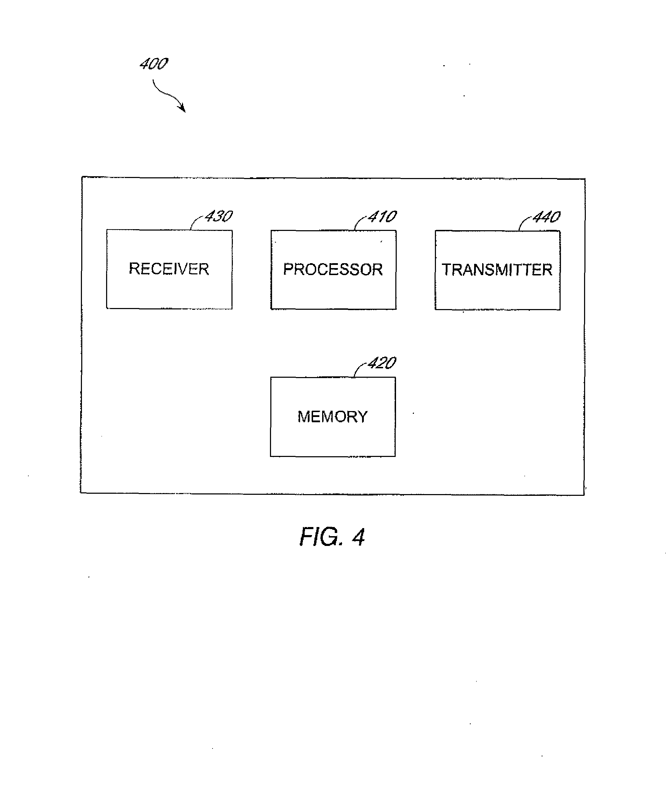

Figure 4 is a functional block diagram of controller 400 suitable for use as the controller 210 of Figure 2. The controller 400 includes a processor 410 in data communication with a memory 420, a receiver 430, and a transmitter 440.

The processor 410 can be a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. A processor may also be implemented as a combination of computing devices, e.g., a combination of a DSP and a microprocessor, a plurality of microprocessors, one or more microprocessors in conjunction with a DSP core, or any other such configuration.

The processor 410 can be coupled, via one or more buses, to read information from or write information to the memory 420. The processor may additionally, or in the alternative, contain memory, such as processor registers. The memory 420 can include processor cache, including a multi-level hierarchical cache in which different levels have different capacities and access speeds. The memory 420 can also include random access memory (RAM), other volatile storage devices, or non-volatile storage devices. The storage can include hard drives, optical discs, such as compact discs (CDs) or digital video discs (DVDs), flash memory, floppy discs, magnetic tape, and Zip drives.

The processor 410 is also coupled to a receiver 430 and a transmitter 440. The transmitter 440 transmits a common synchronization signal generated by the processor 410 to each of the display devices. In one embodiment, the transmitter also transmits a switching signal to a pair of glasses to be worn by a user viewing the display devices. In another embodiment, the transmitter transmits an indication to one or more display devices indicating whether or not the device should transmit a switching signal.

In one embodiment, the receiver 430 receives a plurality of three-dimensional video feeds and provides the video feeds to the processor 410. The receiver 430 can receive three-dimensional video, for example, from the storage device or via a cable or antenna. In one embodiment, the processor 410 generates the synchronization signal from the received video.

In one embodiment, the transmitter 440 transmits at least a portion of the received three-dimensional video feed to each of number of different display devices. However, in another embodiment, the display devices receive the three-dimensional video from another source. In one embodiment, the display devices receive the three-dimensional video from the same source from which the controller 400 receives the video.

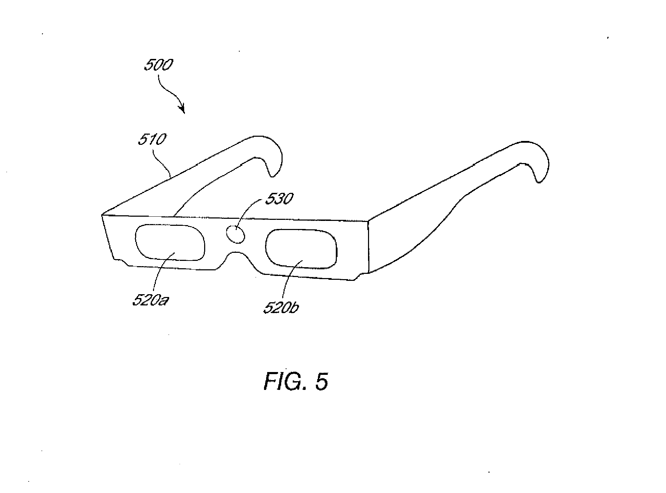

Figure 5 is a functional block diagram of a pair of glasses 500 suitable for use as the glasses 240 of Figure 2. The glasses 500 include a frame 510 which house a first lens 520a and a second lens 520b. The glasses 500 also include a receiver 530 for receiving a switching signal. The glasses are configured to selectively occlude viewing through either the first lens 520a or second lens 520b based on the received switching signal.

Figure 6 is a flowchart illustrating a method 600 of displaying three-dimensional video. The method 600 begins, in block 610, with the reception of three-dimensional video. The video reception can be performed, for example, by the receiver 330 of Figure 3. In one embodiment, the three-dimensional video comprises first video comprising a plurality of first frames and second video comprising a plurality of second frames. When the first video is viewed by a first eye of a user and the second video is viewed by a second eye of the user, the user views a scene with the perception of depth. In one embodiment, the first and second video are received simultaneously as a series of video frames with the first frames aside or above the second frames. In another embodiment, the first video and second video are received sequentially or interleaved.

Next, in block 620, a synchronization signal is received. The synchronization signal can be received, for example, by the receiver 330 of Figure 3. The synchronization signal can be received via a cable or an antenna. For example, the synchronization signal can be received from the controller 210 of Figure 2. In one embodiment, the synchronization signal indicates times for display of first video frames and second video frames. In one embodiment, the synchronization signal is a periodic signal comprising a plurality of periodic indicators.

Although blocks 610 and 620 are described sequentially, the steps described with respect to block 610 and 620 can be performed simultaneously or overlapping in time.

The method 600 continues in block 630 with the display of interleaved first and second frames based on the synchronization signal. The display can be performed, for example, by the display 340 of Figure 3. In one embodiment, the display 340 is responsive to image data provided by the processor 310 of Figure 3 which provides image data based on the synchronization signal. In one embodiment, displaying interleaved first frames and second frames comprises repeatedly displaying only one first frame followed by one second frame.

Figure 7 is a plot of an exemplary synchronization signal 700. The synchronization signal 700 includes a plurality of periodic pulses 710. The periodicity of the synchronization signal can be, for example, 480 Hz, 240 Hz, 120 Hz, 60 Hz, 40 Hz, 30 Hz, 15 Hz, 12 Hz, 10 Hz, 6 Hz, 5 Hz, 3 Hz, 2 Hz, 1 Hz, or any multiple thereof. In one embodiment, each pulse indicates that the display device is to switch display from a first frame to a corresponding second frame or from a second frame to a subsequent first frame. In another embodiment, each pulse indicates that the display device is to display a predetermined number of interleaved first and second frames, each for a predetermined time.

Although the synchronization signal 700 of Figure 7 comprises a plurality of periodic pulses, other synchronization signals can be used. For example, in one embodiment, the synchronization signal is a periodic waveform wherein during each period, the waveform is a modulated known data sequence. Upon receiving such a waveform, the display device can correlate the waveform with the known data sequence to determine when first and second frames should be displayed. Thus, the synchronization signal can include a periodic data pattern. The synchronization signal can be a binary or other protocol driver data signal fed over a data network. For example, in one embodiment, the synchronization signal is received at a display device from another display device rather than the controller. The synchronization signal can be transmitted and received over an Ethernet interface, an HDMI interface, or other high speed interface.

Thus, displaying based on the synchronization signal in block 630 of Figure 6, in one embodiment, comprises switching display from a first frame to a corresponding second frame or from a second frame to a subsequent first frame upon receiving an indicator of the synchronization signal. In another embodiment, displaying based on the synchronization signal comprises displaying a predetermined number of interleaved first and second frames, each for a predetermined time upon receiving an indicator of the synchronization signal.

In one embodiment, the synchronization signal can include data indicative of a reference to a reference time. For example, in one embodiment, a display device has an internal clock which keeps a standard reference time. The accuracy of the standard reference time can be maintained via signaling. The synchronization signal can indicate that the display device is to switch display from a first frame to a corresponding second frame or from a second frame to a subsequent first frame at a particular time as determined in reference to the standard reference time. In another embodiment, the synchronization signal can indicate that the display device is to display a predetermined number of interleaved first and second frames, each for a predetermined time at a particular time as determined in reference to the standard reference time.

In one embodiment, displaying based on the synchronization signal includes delaying the display a predetermined amount. For example, rather than switching between first and second frames immediately upon receiving a pulse of the synchronization signal, the display device might switch between first and second frames after a predetermined time of receiving a pulse of the synchronization signal. Different display devices can be calibrated to have different delay times to ensure that the devices are synchronized even which propagation times and processing times are different amongst different devices.

The method 600 can be performed by multiple display devices such that each of the display devices display interleaved first and second frames based on a common synchronization signal such that at any given time either each display device is displaying a first frame or each display device is displaying a second frame.

As described above with respect to Figure 2, in one embodiment, the controller 210 or one or more of the display devices 220a, 220b, 220c transmits a switching signal to a pair of glasses 250. The glasses 250 can be configured to selectively occlude viewing through either a first lens or second lens based on the received switching signal. For example, in one embodiment, the switching signal is a periodic signal comprising a plurality of pulses. Upon receiving a first pulse, the glasses 250 occlude the first lens and allow viewing through the second lens and upon receiving a second pulse, the glasses 250 occlude the second lens and allow viewing through the first lens.

In one embodiment, the switching signal is based on the synchronization signal such that when one or more display devices are displaying a first frame, the second lens is occluded and when the display devices are displaying a second frame, the first lens is occluded. In one embodiment, the synchronization signal and the switching signal are periodic signals with the same periodicity.

In effect, a control room operator viewing a number of display devices performing the method 600 of Figure 6 and wearing a pair of glasses receiving a switching signal based on the synchronization signal which selectively occlude viewing based on the switching signal will at any particular time, no matter which display device or devices the operator is viewing, see either a first frame with a first eye or a second frame with a second eye. Accordingly, the operator can monitor multiple three-dimensional video feeds in the control room.

While the specification describes particular examples of the present invention, those of ordinary skill can devise variations of the present invention without departing from the inventive concept. Those skilled in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof. The terms signal and threshold can depend upon the signal modulation technique. If Pulse Amplitude Modulation (PAM) is used then the voltage amplitude or power of the signal represents its value. In that case the threshold is simply a power value. If Phase Shift Keying is used, then the phase of the signal, which can translate to the sign of the received signal voltage can represent the signal value. In this case if the signal is integrated over multiple symbols, then the sign and amplitude of the received signal together indicate the signal value.

Those skilled in the art will further appreciate that the various illustrative logical blocks, module, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the examples disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods or algorithms described in connection with the examples disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium or transient medium known in the art. A storage medium may be coupled to the processor such that the processor can read information from, and write information to, the storage medium. In the alternative, the storage medium may be integral to the processor. The processor and the storage medium may reside in an ASIC.

In one or more exemplary embodiments, the functions described herein, including but not limited to those performed by the sigma filter 220, edge detector 230, and mixer 240 of Figure 2, can be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray® disc where disks usually reproduce data magnetically, while discs reproduce data optically with lasers. Combinations of the above should also be included within the scope of computer-readable media.

The previous description of the disclosed examples is provided to enable any person skilled in the art to make or use the present invention. Various modifications to these examples will be readily apparent to those skilled in the art, and the generic principles defined herein may be applied to other examples without departing from the scope of the invention. Thus, the present invention is not intended to be limited to the examples shown herein but is to be accorded the widest scope consistent with the principles and novel features disclosed herein.

## Claims

1. A system for displaying a plurality of three-dimensional video feeds, the system comprising:
a plurality of display devices, each display device configured to receive a three-dimensional video feed comprising first video comprising a plurality of first frames and second video comprising a plurality of second frames; and
a synchronizer configured to transmit a common synchronization signal to each of the display devices,
wherein each display device is configured to receive the synchronization signal and to display interleaved first and second frames in synchrony with the other display devices based on the synchronization signal.

2. The system of Claim 1, wherein the three-dimensional video feed received at a first display device is different from three-dimensional video feed received at a second display device.

3. The system of Claim 1, further comprising a transmitter configured to transmit a switching signal based on the common synchronization signal.

4. The system of Claim 3, further comprising at least one pair of glasses configured to receive the switching signal and selectively occlude viewing of the display devices through a first lens or a second lens based on the switching signal.

5. A method for displaying three-dimensional video, the method comprising:
receiving three-dimensional video comprising first video comprising a plurality of first frames and second video comprising a plurality of second frames;
receiving a synchronization signal; and
displaying interleaved first and second frames based on the synchronization signal.

6. The method of Claim 5, wherein receiving a synchronization signal comprises receiving a synchronization signal via a cable or an antenna.

7. The method of Claim 5, wherein receiving a synchronization signal comprises receiving a synchronization signal having a plurality of periodic indicators and wherein displaying interleaved first and second frames comprises displaying interleaved first and second frames according to the periodic indicators.

8. The method of Claim 5, wherein displaying interleaved first and second frames comprises repeatedly displaying only one first frame followed by only one second frame.

9. The method of Claim 5, further comprising transmitting a switching signal based on the synchronization signal, the switching signal comprising a plurality of periodic switching indicators.

10. The method of Claim 9, further comprising receiving the switching signal at a pair a glasses comprising a first lens and a second lens and selectively occluding the first or second lens based on the received switching signal.

11. A system for displaying three-dimensional video, the system comprising:
a receiver configured to receive three-dimensional video comprising first video comprising a plurality of first frames and second video comprising a plurality of second frames and to receive a synchronization signal; and
a display configured to display interleaved first and second frames based on the synchronization signal.

12. The system of Claim 11, wherein the receiver is configured to receive a synchronization signal having a plurality of periodic indicators and wherein the display is configured to display interleaved first and second frames according to the periodic indicators.

13. the system of Claim 11, wherein the display is configured to repeatedly display only one first frame followed by only one second frame.

14. The system of Claim 11, further comprising a transmitter configured to transmit a switching signal based on the synchronization signal, the switching signal comprising a plurality of periodic switching indicators.

15. A computer-readable medium carrying instructions for controlling a computer to carry out the method of any one of claims 5 to 10, or for configuring a computer as the system of any one of claims I to 4, or 11 to 14.
